# EUROPÄISCHE PATENTSCHRIFT

(11) **EP 1 734 327 B1**
(45) Veröffentlichungstag und Bekanntmachung des Hinweises auf die Patenterteilung: **24.02.2010**
(21) Anmeldenummer: 06012526.7
(22) Anmeldetag: 19.06.2006
(51) Int. Cl.: F28D 15/04

(54) **Wärmeübertrager, insbesondere Sorptions-,Reaktions- und/oder Wärmerohr**
Heat exchanger in particular sorption, or reaction heat exchanger and/or heat pipe.
Échangeur de chaleur, en particulier échangeur de chaleur et/ou caloduc de sorption ou de réaction.

(30) Priorität: 17.06.2005 DE 10528204
(43) Veröffentlichungstag der Anmeldung: 20.12.2006
(73) Patentinhaber: Behr GmbH & Co. KG, 70469 Stuttgart (DE)
(72) Erfinder: Burk, Roland, 70469 Stuttgart (DE)

(56) Entgegenhaltungen:
- EP-A1- 0 733 871
- DE-A1- 4 130 976
- US-A- 4 759 516
- US-A- 5 785 088
- US-A1- 2004 123 980
- US-B1- 6 427 765

## Beschreibung

Die Erfindung betrifft einen Wärmeübertrager, insbesondere ein Sorptions-, Reaktions- und/oder Wärmerohr, gemäß dem Oberbegriff des Anspruchs 1.

Bei Wärmerohren (heatpipes) erfolgt der Wärmetransport durch ein axial zirkulierendes Fluid das dabei Phasenwechsel durchläuft. So wird bei einem bekannten Wärmerohr Wasser als Fluid im wärmeaufnehmenden Teil verdampft und gelangt als Wasserdampf durch den eigentlichen - gut isolierten - Transportteil in die Abgabezone, wo es unter Wärmefreisetzung kondensiert. Durch Kapillarkräfte (und gegebenenfalls Schwerkraft) gelangt die Flüssigkeit in einem die Rohrinnenwand bedeckenden Metalldrahtgeflecht, dem sogenannten Docht, zum Aufnahmeteil zurück. Derartige Wärmerohre können einen um 3 bis 4 Größenordnungen größeren Wärmestrom transportieren als zum Beispiel ein Kupferstab gleicher Dicke und wirken bei Schwerkraftrückführung des Kondensats zusätzlich wie ein Wärmeventil, weil der Wärmestrom nur in eine Richtung fließen kann. Der Wärmetransport wird durch den Druckunterschied zwischen Verdampfungs- und Kondensationszone bewirkt und funktioniert auch bei kleinen Temperaturunterschieden.

Aus der WO 00/66954 A1 ist ein Sorptionswärmeübertrager bekannt, der mit einem Substrat versehen ist, das ein Sorptionsmittel zur Reaktion mit einem polaren gasförmigen Kältemittel oder Wasserstoff enthält. Hierbei ist ein Stapel mit einer Vielzahl von Wärmeübertragungsflächen aufweisenden Platten mit einem Wärmeträgerkanal verbunden, wobei je zwei dieser Platten im Reaktionsraum zwischen sich Scheiben aus dem Substrat aufnehmen. Als Substrat, welches das Sorptionsmittel enthält, kann ein fasriges Material dienen, insbesondere ein Gewebe oder Filz. Als bevorzugtes Sorptionsmittel werden hierbei Metallsalze genannt, die dazu in der Lage sind mit dem polaren gasförmigen Kältemittel unter Bildung einer komplexen Verbindung zu reagieren.

Ein derartiger Wärmeübertrager lässt noch Wünsche offen.

Es ist Aufgabe der Erfindung, einen verbesserten Wärmeübertrager, insbesondere ein verbessertes Sorptions-, Reaktions- und/oder Wärmerohr, zur Verfügung zu stellen.

Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist ein Wärmeübertrager, insbesondere ein Sorptions-, Reaktions- und/oder Wärmerohr, vorgesehen, mit einer Vielzahl von Fasern, wobei eine Mehrzahl der Fasern mit ihrem einen Ende an oder in der Wand angebracht sind. Das andere Ende der Fasern ist beabstandet von der Wandoberfläche angeordnet. Dabei sind die einzelnen Fasern vorzugsweise im Wesentlichen parallel zueinander angeordnet.

Die Fasern sind vorzugsweise senkrecht oder annähernd senkrecht zur Wandoberfläche - und somit parallel zur Wärmetransportrichtung - ausgerichtet, jedoch können zur Beeinflussung einer bestimmten Richtung des kapillaren Flüssigkeitstransports und/oder bei zu geringer erreichter Faserdichte im Rahmen der Beflockung oder anderen An- oder Einbringung der Fasern dieselben schräg zur Wandoberfläche angeordnet sein, was im Rahmen der Beflockung, An- oder Einbringung der Fasern oder im Anschluss hieran erfolgen kann.

Die Fasern werden vorzugsweise mittels eines Beflockungsprozesses auf der Wandoberfläche angebracht. Derartige Verfahren sind technisch erprobt und vorhandene Vorrichtungen können leicht an die besonderen Bedingungen im Rahmen einer Beflockung mit den entsprechenden Fasermaterialien angepasst werden.

Da jede einzelne Faser über einen wärmeleitenden Haftfilm an der Wand befestigt ist, besteht eine hohe mechanische Festigkeit, die vor allem bei sogenannten Complex-Compound-Adsorbentien (Salze) und Metallhydriden zu einer verbesserten Haltbarkeit des Adsorptionsbettes führt.

Bei den Fasern handelt es sich vorzugsweise um Metallfasern, Kohlefasern und/oder teil- und/oder durchaktivierte Aktivkohlefasern. Diese Fasern sind gut wärmeleitend, so dass die Wärme gut abgeleitet oder von außen zugeleitet werden kann. Unter Teilaktivierung wird vorliegend verstanden, dass die Faser durch Steuerung des Aktivierungsprozesses nur bis zu einer bestimmten Tiefe der Faser aktiviert wird, so dass im Kembereich der Faser eine vergleichsweise geringe Porosität mit entsprechend größerer Wärmeleitfähigkeit vorliegt. Bei der Verwendung aktivierter Kohlefasern als Beflockungsmittel besteht zudem der Vorteil eines sehr guten Stofftransportes an die auch makroskopisch gut zugängliche Faseroberfläche mit kurzen Diffusionswegen zu den sorptionsaktiven Zentren innerhalb der Faser. Durch Anpassung der Beflockungsdichte und Länge des Faser-Kurzschnittes können auch hohe Belegungsdichten mit entsprechend hoher Sorptiv-Aufnahmekapazität erreicht werden.

An Stelle von Kohlefasern können auch Vorläufersubstanzen hiervon, insbesondere Textilfasern, wie Viskosefasern, oder aus einem Phenolharz hergestellte Fasern als Beflockungsmittel verwendet werden und dieselben nach erfolgter Beflockung im fertigen Verbund auf bekannte Weise verkokt und ggf. aktiviert werden. Dieses Verfahren kann insbesondere dazu dienen, auch in Faser-Längsrichtung einen unterschiedlichen Aktivierungsgrad zu erzeugen. Dadurch kann die Faser beispielsweise am Fußpunkt eine geringe Porosität bei entsprechend höherer Wärmeleitfähigkeit und am anderen Ende eine hohe Porosität bei entsprechend verringerter Wärmeleitfähigkeit aufweisen.

Bei der Verwendung von teil- und/oder durchaktivierte Aktivkohlefasern kann das applizierte Faserbett sowohl die Funktion der Wärmeleitung als auch der sorptiven Aufnahme des Arbeitsmittels erfüllen, wodurch (außer dem Haftfilm bzw. der Haftschicht) keine weitere Substanz erforderlich ist.

Die Fasern weisen bevorzugt eine meso- und/oder mikroporöse Struktur auf, die durch Aktivieren der Fasern gebildet wird, so dass die Fasern selbst die sorptionsaktive Substanz darstellen. Alternativ sind die Fasern mit einem sorptions- oder reaktionsaktiven Material belegt oder imprägniert, wobei insbesondere auch eine Kombination mit verbesserter Wärmeleitfähigkeit möglich ist. Die Aufbringung des sorptions- oder reaktionsaktiven Materials kann auch in einem zweiten Prozessschritt erfolgen, d.h. nach der eigentlichen Beflockung. Hierbei können auch Hilfsstoffe (Lösungsmittel, Binder, Haftvermittler etc.) verwendet werden, um die Materialien an den Fasern anzulagern oder aufzukristallisieren. Die Sorptionsmittel liegen bei der nachträglichen Aufbringung bevorzugt in gelöster oder dispergierter Form vor, wobei die Hilfsstoffe durch Abdampfen, Polymerisieren, Umwandeln usw. nach dem Applikationsprozess wieder aus der Struktur entfernt oder in inerte Stoffe umgewandelt werden.

Als Klebstoff für die Beflockung werden bevorzugt organische oder auch anorganische Binder, insbesondere Alkalisilikate, verwendet. Dabei sind auch andere temperaturbelastbare Binder, die gegenüber dem eingesetzten Sorpionsmittel und Sorbat sowie den metallischen Wärmeübertragermaterialien (Edelstahl, Kupfer, Kupferlegierungen, Aluminium, Aluminiumlegierungen) im Wesentlichen inert sind, geeignet.

Der Klebstoff enthält bevorzugt wärmeleitende Stoffe, so dass die Wärmeab-oder-zuleitung verbessert wird.

Zur Verbesserung des Wärmetransports nach bzw. von außen sind außenseitig am Sorptions-, Reaktions- und/oder Wärmerohr bevorzugt direkt oder indirekt angeordnete Rippen vorgesehen, so dass die Wärme großflächig außerhalb des Rohres abgegeben bzw. aufgenommen werden kann. Dabei sind unter Umständen zusätzliche oberflächenvergrößernde oder wärme-übergangsverbessemde Maßnahmen möglich.

Die Fasern können mehrschichtig fixiert sein.

Bei der Beflockung kann das eine Ende der Faser in mindestens eine Schicht eingeschmolzen oder eingegossen werden. Dies kann beispielsweise mittels einer plattierten Metallwand, in welche die Fasern im aufgeschmolzenen Zustand eindringen und in der sie nach dem Abkühlen bei gutem Wärmeübergang und guter mechanischer Stabilität gehalten werden. Die Beflockung erfolgt hierbei unter erhöhter Temperatur und gegebenenfalls einer Schutzgasatmosphäre und unter Anwendung eines Flussmittels zur Auflösung einer möglicherweise vorhandenen Oxidschicht. Die Beflockung unter Einschmelzen eines Endes ist insbesondere für Metallfasern geeignet.

In einem Zwischenbereich, welcher eine Adsorptionszone von einer Verdampfungszone bzw. eine Desorptionszone von einer Kondensationszone trennt, sind vorzugsweise keine Fasern angeordnet, wobei die Fasern in den unterschiedlichen Bereichen bevorzugt unterschiedlich strukturiert sind.

Die Fasern weisen vorzugsweise eine gute Adhäsion gegenüber dem einzusetzenden Arbeitsmittel im flüssigen Zustand desselben auf, so dass bei ausreichend hoher Beflockungsdichte Kapillarkräfte erzeugt werden, durch die größere Mengen an flüssigem Arbeitsmittel zwischen den Fasern gehalten und auch entlang dem Wandbereich durch Kapillarkräfte transportiert werden können. Dieser Effekt kann vorteilhaft in Wärmerohren und der Verdampfungs-/Kondensationszone von Sorptionsrohren verwendet werden.

Bevorzugt sind in einem Teilbereich Fasern angeordnet, die schräg zur Wandoberfläche angeordnet sind. Dies kann insbesondere zur Beeinflussung einer bestimmten Richtung des kapillaren Flüssigkeitstransports dienen, d.h die Saugkraft (Kapillarität) erhöhen. Die schräge Anordnung der Fasern erfolgt bevorzugt durch gleitendes, leichtes Andrücken bevor der Klebefilm oder Haftvermittlungsfilm vollständig ausgehärtet ist.

Derartige Sorptions-, Reaktions- und/oder Wärmerohre können bevorzugt als Teil einer Kraftfahrzeug-Klimaanlage verwendet werden, insbesondere um vorhandene überschüssige Energie zu nutzen. Auch in der stationären Industrie- und Haustechnik gibt es Anwendungsmöglichkeiten, bei denen Wärme verlustarm transportiert oder gepumpt werden muss.

Im Folgenden wird die Erfindung anhand zweier Ausführungsbeispiele unter Bezugnahme auf die Zeichnung im Einzelnen erläutert. In der Zeichnung zeigen:
- Fig. 1: eine Prinzipskizze eines Wärmerohres gemäß dem ersten Ausführungsbeispiel,

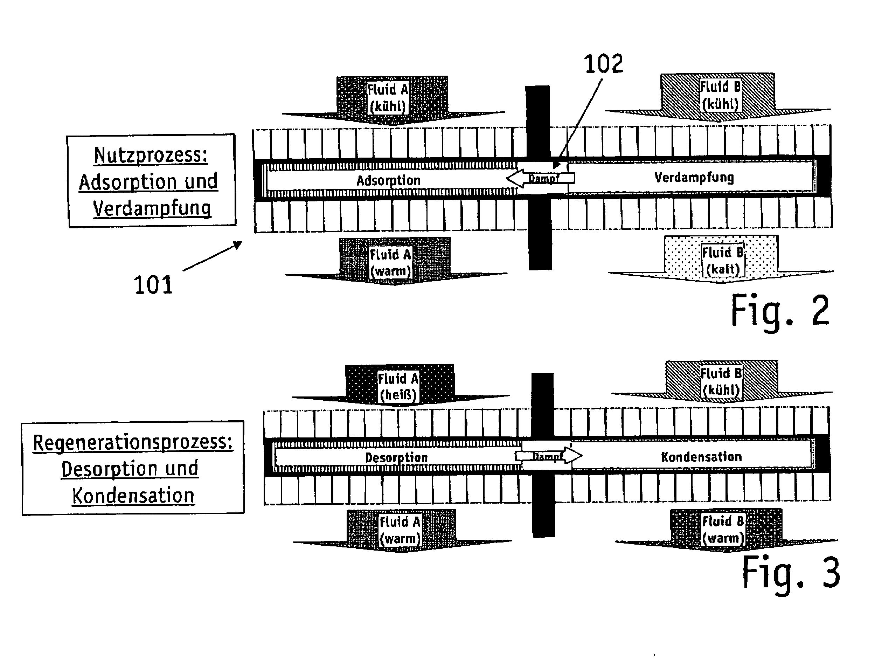

- Fig. 2: eine Prinzipskizze eines Sorptions- oder Reaktionsrohres gemäß dem zweiten Ausführungsbeispiel im Nutzprozess,
- Fig. 3: die Prinzipskizze von Fig. 2 im Regenerationsprozess, und
- Fig. 4: die Prinzipskizze von Fig. 2 mit Detailansichten.

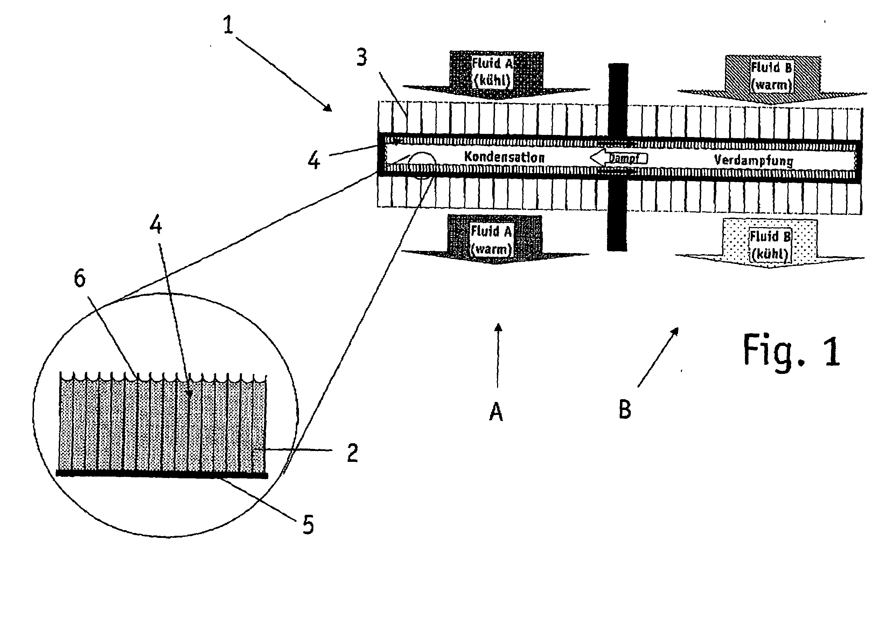

Fig. 1 zeigt ein Wärmerohr 1, welches ein Arbeitsmittel 2 enthält. Das Wärmerohr 1 wird in einem ersten Bereich A von einem ersten Fluid A und in einem zweiten Bereich B von einem zweiten Fluid B umströmt. Gemäß dem vorliegenden Ausführungsbeispiel handelt es sich beim ersten Fluid A um zu erwärmende Luft, die in kaltem Zustand auf das Wärmerohr 1 zuströmt (Pfeil links, oberhalb des Wärmerohrs 1) und im durch das Wärmerohr 1 erwärmten Zustand vom Wärmerohr 1 wegströmt (Pfeil links, unterhalb des Wärmerohrs 1) und beim zweiten Fluid B um zu kühlende Luft, die in warmem Zustand auf das Wärmerohr 1 zuströmt (Pfeil rechts, oberhalb des Wärmerohrs 1) und im durch das Wärmerohr 1 gekühlten Zustand vom Wärmerohr 1 wegströmt (Pfeil rechts, unterhalb des Wärmerohrs 1). Zur Verbesserung des Wärmeübergangs von Wärmerohr 1 zum Fluid A oder vom Fluid B zum Wärmerohr 1 sind eine Mehrzahl von Rippen 3 vorgesehen, welche die Fluide A und B durchströmen.

Im Wärmerohr 1 erfolgt im Bereich A in Folge der Abkühlung oder Wärmeabgabe an das erste Fluid A eine Kondensation des dampfförmigen Arbeitsmittels 2, das sich im Wandbereich 4 des Wärmerohrs 1 niederschlägt (Kondensationszone). Der Wandbereich 4 ist in der vergrößerten Darstellung dargestellt.

An der Wand 5 des Wärmerohrs 1 sind im Wesentlichen senkrecht von der Wandoberfläche abstehende Fasern 6 vorgesehen. Diese wurden gemäß dem vorliegenden Ausführungsbeispiel mittels eines herkömmlichen elektrostatischen Beflockungsverfahrens, wie es aus der Textilindustrie bekannt ist, aufgebracht und an der Wandoberfläche befestigt. Bei den Fasern 6 handelt es sich vorliegend um gut wärmeleitende Fasern mit einer hohen Adhäsivität. Als Klebstoff dient ein Binder, der ebenfalls eine gute Affinität zum verwendeten Arbeitsmittel besitzt, von diesem aber nicht gelöst oder angegriffen wird.

An den Fasern 6 schlägt sich das Arbeitsmittel 2 nieder, sammelt sich zwischen den Fasern 6 und wird, wie durch zwei schwarze Pfeile im Wandbereich 4 von Fig. 1 dargestellt, durch Kapillarkräfte vom Bereich A in den Bereich B transportiert, beispielsweise unterstützt durch die Schwerkraft bei entsprechender Wärmerohranordnung.

Der Wandbereich 4 des zweiten Bereichs B ist entsprechend dem Wandbereich 4 des ersten Bereichs A ausgebildet. Auf Grund der vom zweiten Fluid B aufgenommenen Wärme verdampft in diesem Bereich (Verdampfungszone) das flüssige Arbeitsmittel und gelangt in Folge der Druckdifferenz in dampfförmigem Zustand wieder in den ersten Bereich A, so dass sich ein Kreislaufsystem im Wärmerohr 1 ausbildet, in dem das Arbeitsmittel laufend einer Zustandsänderung unterzogen wird.

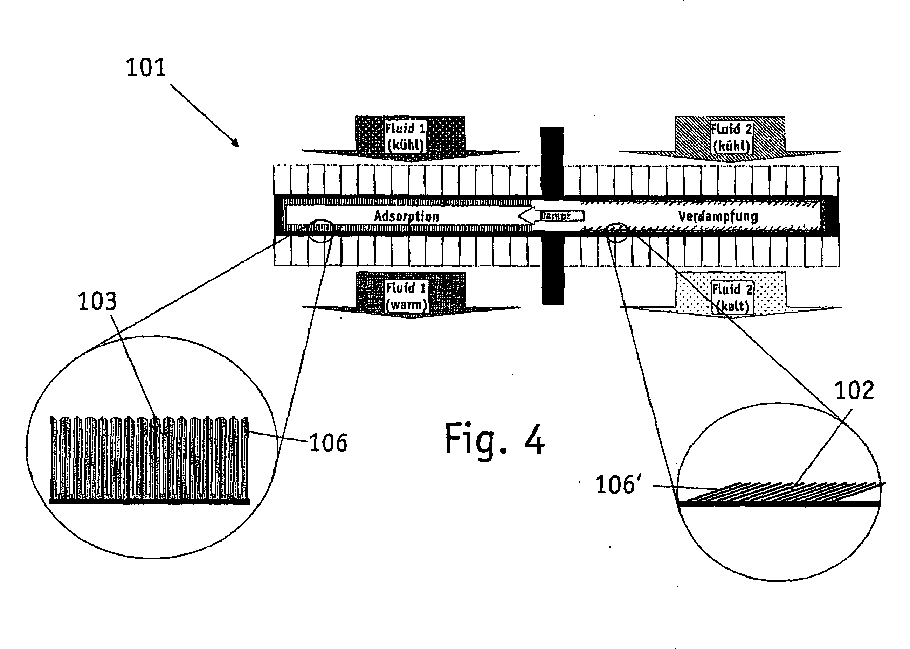

Gemäß dem zweiten Ausführungsbeispiel ist ein Sorptionsrohr 101 mit einem Arbeitsmittel 102 vorgesehen, dessen äußerer Aufbau dem des Wärmerohres 1 entspricht. Die Innenstruktur des Bereichs A, welcher im Nutzprozess der Adsorptionszone und im Regenerationsprozess der Desoprtionszone entspricht, besteht ebenfalls aus einer beflockten Faserstruktur, wobei jedoch die Einzelfasem mit einem Sorptions- oder Reaktionsmittel 103 belegt sind (siehe Detailansicht von Fig. 4), oder bei welcher der Faserzwischenraum teilweise oder vollständig mit Sorptionsmittel und optional mit einem Bindemittel vermischt ausgefüllt ist. Auch der zweite Bereich B, welcher der Verdampfungszone im Nutzungsprozess und der Kondensationszone im Regenerationsprozess entspricht, und der Zwischenbereich zwischen Bereich A und Bereich B unterscheidet sich vom Aufbau des Wärmerohres.

Im Bereich A, in welchem während des Nutzungsprozesses die Adsorption des Arbeitsmittels 102 erfolgt, sind eine Mehrzahl von Fasern 106 vorgesehen, die entsprechend dem ersten Ausführungsbeispiel im Wesentlichen senkrecht zur Wandoberfläche ausgerichtet sind und mit einer (in Fig. 1 nicht dargestellten) sorptionsaktiven Schicht belegt sind oder im Falle von Kohlefasern selbst aktiviert, d.h. mit einer Porenstruktur, versehen sind.

In einem relativ kleinen Zwischenbereich zwischen Bereich A und Bereich B sind vorliegend keine Fasern vorgesehen, da dort ein axialer Flüssigkeitstransport unterbunden werden muss.

Der Bereich B, in welchem während des Nutzungsprozesses die Verdampfung des Arbeitsmittels 102 erfolgt, besitzt vorliegend, wie in Fig. 4 vergrößert dargestellt, eine Mehrzahl von Fasern 106', die "flachgelegt", d.h. schräg zur Wandoberfläche ausgerichtet sind. Alternativ kann der Bereich B eine Kapillarstruktur besitzen, wie sie an sich bekannt ist.

Die Soprtionsmittelmenge im Bereich A, die Faserlänge, -dicke und ―dichte im Bereich A und B, sowie die Neigung der Fasern im Bereich B sind so aufeinander abgestimmt, dass die maximal im Betrieb adsorbierbare Kältemittelmenge des Bereichs A bei Desorption und Kondensation in dem Bereich B hierin von den kapillaren Faserzwischenräumen vollständig aufgenommen und gehalten werden kann. Die Faserlänge beträgt vorzugsweise zwischen 0,5 bis 5 mm, insbesondere zwischen 1 und 3 mm, vorliegend 2 mm. Je nach Hauptzweck der Faserstruktur, die je nach Ausführungsform die Funktionen "mechanische Armierung eines Sorptions- oder Reaktionsbettes", "Erhöhung der von der Wand weggerichteten Wärmeleitfähigkeit", "Bildung einer Kältemittel transportierenden oder haltenden Kapillarstruktur" oder "Bildung eines aktivierten Kohlefaserbettes" können Material, Faserdicke und Belegungsdichte in relativ weiten Grenzen variieren. Typisch sind Faserdicken im Bereich von 5 bis 200 µm, insbesondere 10 bis 150 µm, vorliegend 80 µm. Der Faser-Neigungswinkel kann in Kombination mit der Belegungsdichte und/oder der Faserlänge dazu benutzt werden, um das Verhältnis von Kapillarvolumen und Kapillarkraft an die Bedürfnisse anzupassen.

## Patentansprüche

1. Wärmeübertrager, insbesondere Sorptions-, Reaktion- und/oder Wärmerohr, mit einer Vielzahl von Fasern (6; 106), wobei eine Mehrzahl der Fasern (6; 106 und 106') mit ihrem einen Ende an oder in der Wand angebracht sind, **dadurch gekennzeichnet, dass** die Fasern (6; 106) senkrecht oder annähernd senkrecht zur Wandoberfläche ausgerichtet sind und/oder dass in einem Bereich, insbesondere einem Teilbereich, Fasern (106') angeordnet sind, die schräg zur Wandoberfläche angeordnet sind.

2. Wärmeübertrager nach Anspruch 1, **dadurch gekennzeichnet, dass** die Fasern (6; 106) mittels eines Beflockungsprozesses auf der Wandoberfläche angebracht sind.

3. Wärmeübertrager nach Anspruch 1 oder 2, **dadurch gekennzeichnet, dass** die Fasern (6; 106) Metallfasern, Kohlefasern und/oder teil- und/oder durchaktivierte Aktivkohlefasem sind.

4. Wärmeübertrager nach einem der vorhergehenden Ansprüche, **dadurch gekennzeichnet, dass** die Fasern (6; 106) eine meso- und/oder mikroporöse Struktur aufweisen.

5. Wärmeüberträger nach einem der vorhergehenden Ansprüche, **dadurch gekennzeichnet, dass** die Fasern (6; 106) am Fußpunkt eine geringe Porosität bei entsprechend höherer Wärmeleitfähigkeit und am anderen Ende eine hohe Porosität bei entsprechend verringerter Wärmeleitfähigkeit aufweisen.

6. Wärmeübertrager nach einem der vorhergehenden Ansprüche, **dadurch gekennzeichnet, dass** die Fasern (6; 106) mit einem sorptions- oder reaktionsaktiven Material belegt oder imprägniert sind.

7. Wärmeübertrager nach einem der vorhergehenden Ansprüche, **dadurch gekennzeichnet, dass** als Klebstoff kältemittelbeständige Binder verwendet werden.

8. Wärmeübertrager nach einem der vorhergehenden Ansprüche, **dadurch gekennzeichnet, dass** der Klebstoff wärmeleitende Stoffe enthält.

9. Wärmeübertrager nach einem der vorhergehenden Ansprüche, **dadurch gekennzeichnet, dass** die Fasern mehrschichtig fixiert sind.

10. Wärmeübertrager nach einem der vorhergehenden Ansprüche, **dadurch gekennzeichnet, dass** die Fasern mit einem Ende in mindestens eine Schicht eingeschmolzen oder eingegossen sind.

11. Wärmeübertrager nach einem der vorhergehenden Ansprüche, **dadurch gekennzeichnet, dass** in einem Zwischenbereich, welcher eine Adsorptionszone von einer Verdampfungszone bzw. eine Desorptionszone von einer Kondensationszone trennt, keine Fasern (106, 106') angeordnet sind.

12. Verfahren zur Herstellung eines Wärmeübertragers nach Anspruch 1, **dadurch gekennzeichnet, dass** Fasern (6; 106, 106') mittels eines Beflockungsverfahrens auf einer Wandoberfläche aufgebracht werden.

13. Verfahren zur Herstellung eines Wärmeübertragers nach Anspruch 1, **dadurch gekennzeichnet, dass** Fasern (6; 106, 106') in eine aufgeschmolzene Schicht mit ihrem einen Ende eingelagert werden.

14. Verwendung eines Wärmeübertragers, insbesondere eines Sorptions-, Reaktions- und/oder Wärmerohrs, nach einem der Ansprüche 1 bis 11 als Teil einer Kraftfahrzeug-Klimaanlage, als Teil einer Adsorptions-Wärmepumpe oder Kälteanlage für die Industrie- oder Haustechnik.

## Claims

1. Heat exchanger, in particular a sorption, reaction heat exchanger and/or heat pipe with a plurality of fibres (6; 106), wherein a majority of the fibres (6; 106 and 106') are mounted to or in the wall with one end, **characterised in that** the fibres (6; 106) are aligned vertically or approximately vertically to the wall surface and/or that fibres are arranged in a region, especially in a partial region, which are arranged in an oblique manner to the wall surface.

2. Heat exchanger according to claim 1, **characterised in that** the fibres (6; 106) are mounted to the wall surface by means of a flocking process.

3. Heat exchanger according to claim 1 or 2, **characterised in that** the fibres (6; 106) are metal fibres, carbon fibres and/or partially or completely activated active carbon fibres.

4. Heat exchanger according to one of the preceding claims, **characterised in that** the fibres (6; 106) have a mesoporous and/or microporous structure.

5. Heat exchanger according to one of the preceding claims, **characterised in that** the fibres (6; 106) have a low porosity at the base with a corresponding higher heat conductivity and a high porosity with a corresponding reduced heat conductivity at the other end.

6. Heat exchanger according to one of the preceding claims, **characterised in that** the fibres (6; 106) are coated or impregnated with a sorption- or reaction-active material.

7. Heat exchanger according to one of the preceding claims, **characterised in that** coolant-resistant binders are used as adhesive.

8. Heat exchanger according to one of the preceding claims, **characterised in that** the adhesive contains heat-conductive materials.

9. Heat exchanger according to one of the preceding claims, **characterised in that** the fibres are fixed in several layers.

10. Heat exchanger according to one of the preceding claims, **characterised in that** the fibres are melted on or cast into at least one layer with one end.

11. Heat exchanger according to one of the preceding claims, **characterised in that** no fibres (6; 106) are arranged in an intermediate region which separates an adsorption zone from an evaporation zone or a desorption zone from a condensation zone.

12. Method for producing a heat exchanger according to claim 1, **characterised in that** fibres (6; 106, 106') are applied to a wall surface by means of a flocking method.

13. Method for producing a heat exchanger according to claim 1, **characterised in that** fibres (6; 106, 106') are incorporated in a melted-on layer with one end.

14. Use of a heat exchanger, in particular a sorption, reaction heat exchanger and/or heat pipe according to one of claims 1 to 11 as part or a motor vehicle airconditioning unit, as part of an adsorption heat pump or cooling device for industrial or home engineering.

## Revendications

1. Echangeur de chaleur, en particulier tube de sorption, de réaction et / ou de chaleur comprenant une multiplicité de fibres (6 ; 106), où des fibres (6 ; 106 et 106'), formant une pluralité de fibres, sont, par l'une de leurs extrémités, appliquées sur ou dans la paroi,
**caractérisé en ce que** les fibres (6 ; 106) sont orientées perpendiculairement ou presque perpendiculairement à la surface de la paroi et / ou **en ce que** des fibres (106') sont disposées dans une zone, en particulier dans une zone partielle, lesquelles fibres sont disposées de façon inclinée par rapport à la surface de la paroi.

2. Echangeur de chaleur selon la revendication 1, **caractérisé en ce que** les fibres (6 ; 106) sont appliquées sur la surface de la paroi, au moyen d'un processus de flocage.

3. Echangeur de chaleur selon la revendication 1 ou 2, **caractérisé en ce que** les fibres (6 ; 106) sont des fibres métalliques, des fibres de carbone et / ou des fibres à charbon actif activées et / ou partiellement activées.

4. Echangeur de chaleur selon l'une quelconque des revendications précédentes, **caractérisé en ce que** les fibres (6 , 106) présentent une structure mésoporeuse et / ou microporeuse.

5. Echangeur de chaleur selon l'une quelconque des revendications précédentes, **caractérisé en ce que** les fibres (6 ; 106) présentent, à la base, une faible porosité dans le cas d'une conductivité thermique augmentée en conséquence et, au niveau de l'autre extrémité, une porosité élevée dans le cas d'une conductivité thermique réduite en conséquence.

6. Echangeur de chaleur selon l'une quelconque des revendications précédentes, **caractérisé en ce que** les fibres (6 ; 106) sont recouvertes ou imprégnées d'une matière active à la sorption ou à la réaction.

7. Echangeur de chaleur selon l'une quelconque des revendications précédentes, **caractérisé en ce que** l'on utilise, comme colle, des liants résistant au fluide frigorigène.

8. Echangeur de chaleur selon l'une quelconque des revendications précédentes, **caractérisé en ce que** la colle contient des matières conductrices de la chaleur.

9. Echangeur de chaleur selon l'une quelconque des revendications précédentes, **caractérisé en ce que** les fibres sont fixées en plusieurs couches.

10. Echangeur de chaleur selon l'une quelconque des revendications précédentes, **caractérisé en ce que** les fibres sont, par une extrémité, fondues ou enrobées dans au moins une couche.

11. Echangeur de chaleur selon l'une quelconque des revendications précédentes, **caractérisé en ce qu'**aucune fibre (106, 106') n'est disposée dans une zone intermédiaire qui sépare une zone d'adsorption, d'une zone d'évaporation, ou bien une zone de désorption, d'une zone de condensation.

12. Procédé de fabrication d'un échangeur de chaleur selon la revendication 1, **caractérisé en ce que** des fibres (6 ; 106, 106') sont appliquées sur une surface de paroi, au moyen d'un procédé de flocage.

13. Procédé de fabrication d'un échangeur de chaleur selon la revendication 1, **caractérisé en ce que** des fibres (6 ; 106, 106') sont, par l'une de leurs extrémités, intégrées dans une couche fondue.

14. Utilisation d'un échangeur de chaleur, en particulier d'un tube de sorption, de réaction et / ou de chaleur selon l'une quelconque des revendications 1 à 11, comme composant d'un système de climatisation d'un véhicule automobile, comme composant d'une pompe à chaleur à adsorption ou d'un système de réfrigération pour la technique industrielle ou pour la technique des équipements ménagers.
